(19) Europäisches Patentamt

European Patent Office

Office européen des brevets

(11) EP 1 693 839 A2

(12) EUROPEAN PATENT APPLICATION

(43) Date of publication:
23.08.2006 Bulletin 2006/34

(51) Int Cl.:
G11B 7/135 (2006.01)

(21) Application number: 06003036.8

(22) Date of filing: 15.02.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 16.02.2005 JP 2005039075

(71) Applicant: Epson Toyocom Corporation
Saiwai-ku
Kawasaki-shi
Kanagawa 212-8513 (JP)

(72) Inventors:
• Yoshida, Kiyokazu
Kamiina-gun,
Nagano-ken 399-4696 (JP)
• Furusato, Daiki
Kamiina-gun,
Nagano-ken 399-4696 (JP)
• Setoguchi, Kazutoshi
Kamiina-gun,
Nagano-ken 399-4696 (JP)

(74) Representative: HOFFMANN EITLE
Patent- und Rechtsanwälte
Arabellastrasse 4
81925 München (DE)

(54) **A numerical aperture controlling filter and a method for manufacturing the same**

(57) A numerical aperture controlling filter (10), including: a first region (A) that allows, when a laser beam having a different wavelength is incident on the numerical aperture controlling filter, a transmission of laser beams having all the wavelengths; and a second region (B) that blocks a transmission of a laser beam having a predefined wavelength, wherein: different materials are used for outermost layers of a first optical thin film that is formed in the first region and a second optical thin film that is formed in the second region; and an optical path length of either of the first optical thin film or the second optical thin film is adjusted by means of etching after depositing the first optical thin film and the second optical thin film.

FIG. 1A

EP 1 693 839 A2

## Description

BACKGROUND

1. Technical Field

The present invention relates to a numerical aperture controlling filter and a method for manufacturing the numerical aperture controlling filter, especially a numerical aperture controlling filter that is used for condensing a laser beam having a different wavelength to an optical disk through a single lens in optical pickup, wherein a light source that emits two or more wavelengths is used, and has a diaphragm function for a different incident light, as well as a method for manufacturing such a numerical aperture controlling filter.

2. Related Art

When the information recording or reproducing of optical disks such as CDs, DVDs, etc. is performed, the technique of optical pickup is employed. In optical pickup, when a light source that emits a laser beam having two or more wavelengths is used, a numerical aperture controlling filter having a diaphragm function, wherein laser beams of several wavelengths can be handled with a single lens, is used.

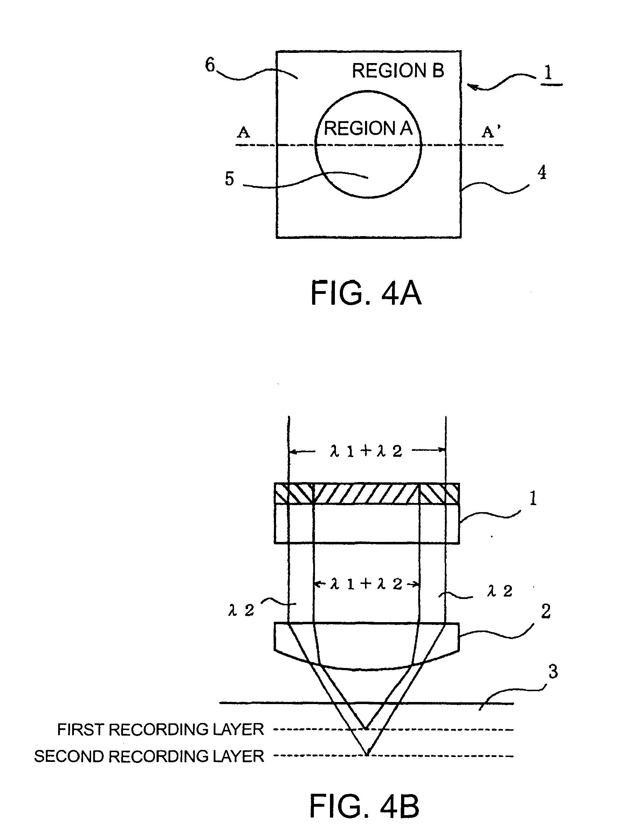

Figs. 4A and 4B are diagrams showing an example use of a known numerical aperture controlling filter. Fig. 4A shows an example configuration in the case of condensing laser beams to an optical disk. Fig. 4B shows the configuration of a numerical aperture controlling filter. The example configuration in Fig. 4A shows how laser beams having two wavelengths are emitted from a light source in optical pickup, wherein the laser beams are emitted to the pit of an optical disk 3 through a numerical aperture controlling filter 1 and an objective lens 2. The light source emits two types of laser beams: one having a wavelength $\lambda 1$ and the other having a wavelength $\lambda 2$. A region A on the numerical aperture controlling filter 1 allows the transmission of both types of laser beams having the wavelengths $\lambda 1$ and $\lambda 2$. However, a region B on the numerical aperture controlling filter 1 only allows the transmission of the laser beam having the wavelength $\lambda 2$ and reflects the laser beam having the wavelength $\lambda 1$. Therefore, the laser beam having the wavelength $\lambda 1$ is narrowed into a predefined range to enter the objective lens 2.

On the other hand, in the recording surface of the optical disk 3, a first recording layer, from which information is read by the wavelength $\lambda 1$, and a second recording layer, from which information is read by the wavelength $\lambda 2$, are provided in different depths. The objective lens 2 condenses the laser beam having the wavelength $\lambda 1$ to the first recording layer and the laser beam having the wavelength $\lambda 2$ to the second recording layer. For example, if the laser beam having the wavelength $\lambda 1$ enters the objective lens 2 without being narrowed by the numerical aperture controlling filter 1, the laser beam is not condensed to the first recording layer due to the aberration of the objective lens 2. In order to solve such a problem, the numerical aperture controlling filter 1 is employed in optical pickup using a laser beam having a different wavelength.

The numerical aperture controlling filter 1 shown in Fig. 4B is configured by depositing a first optical thin film 5 in the region A on a glass substrate 4 and a second optical thin film 6 in the region B on the glass substrate 4. The first optical thin film 5 and the second optical thin film 6, which have different thin-film configurations, are deposited by alternately evaporating high-refractive materials ($Ta_2O_5$, $TiO_2$, $Nb_2O_5$, etc.) and low-refractive materials ($SiO_2$, $MgF_2$, etc.)

Next, a method for manufacturing the known numerical aperture controlling filter will be described.

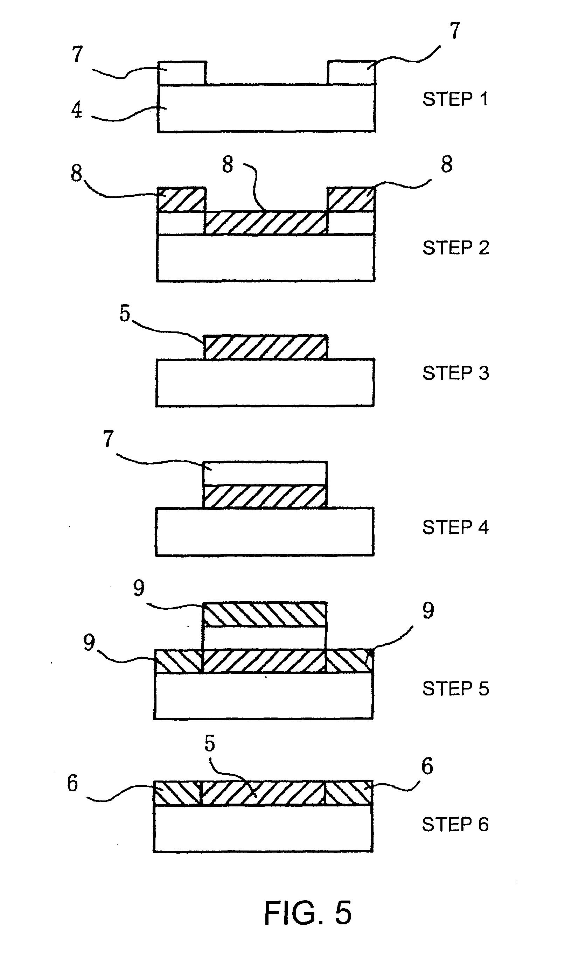

Fig. 5 is a diagram showing the manufacturing steps of the known numerical aperture controlling filter. First, in order to form the first optical thin film 5 in the region A, a photoresist 7 is applied all over the glass substrate 4. Then, the photoresist 7 is patterned so as to leave the photoresist 7 only in the region B (a step 1). Further, after depositing a multilayer film by performing a first evaporation using a predefined thin-film material 8 (a step 2), the thin-film material 8, which is evaporated on the photoresist 7, is removed together with the photoresist 7 (a step 3). Thus, the formation of the first optical thin film 5 in the region A is completed.

Further, in order to form the second optical thin film 6 in the region B, the photoresist 7 is applied all over the glass substrate 4. Then, the photoresist 7 is patterned so as to leave the photoresist 7 only in the region A (a step 4). Further, after depositing another multilayer film by performing a second evaporation using another predefined thin-film material 9 (a step 5), the thin-film material 9, which is evaporated on the photoresist 7, is removed together with the photoresist 7 (a step 6). Thus, the formation of the second optical thin film 6 in the region B is completed. The numerical aperture controlling filter is completed through the above first deposition and the second deposition.

JP-A-2004-79010 is an example of related art.

In the known numerical aperture controlling filter, however, there has been a difference in evaporated film thickness between the first optical thin film 5 deposited in the region A and the second optical thin film 6 deposited in the region B, which has caused a difference in optical path length. When the laser beam having the wavelength $\lambda 2$ transmits through the region A and the region B in such circumstances, a difference in phase (hereinafter referred to as a phase gap) occurs due to the difference in optical path length between the first optical thin film 5 and the second optical thin film 6. The phase gap is problematic because of the influence on data reading and writing when a numerical aperture controlling filter is used in optical pickup.

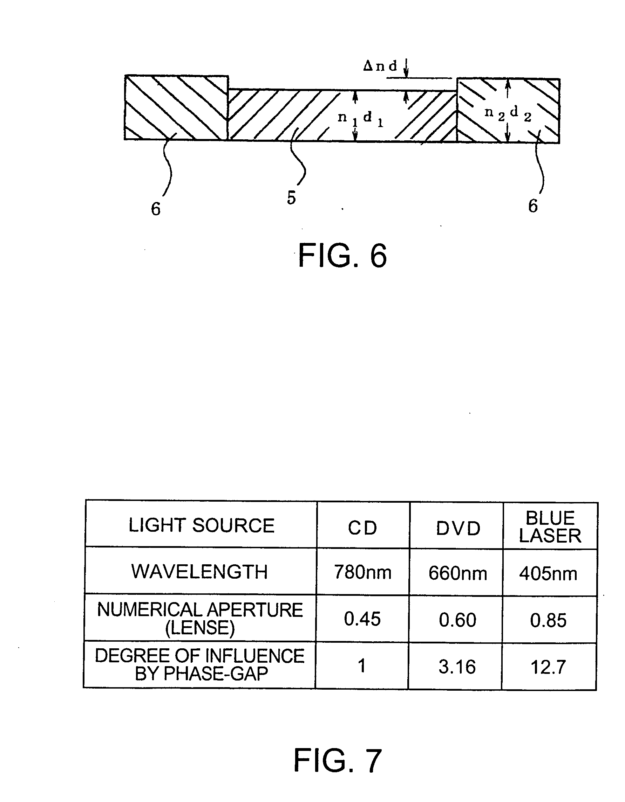

Fig. 6 is a diagram showing a phase gap in the known numerical aperture controlling filter. Supposing that n is the refractive index of a thin film and that d is the physical film thickness of the thin film, the optical path length of the first optical thin film 5 is defined as $n_1d_1$; and the optical path length of the second optical thin film 6 is defined as $n_2d_2$. Hence, the phase gap $\Delta nd$ is expressed as:

$$\Delta nd = n_1d_1 - n_2d_2$$

Therefore, in the known method, an experimental production has been performed during the designing process, for the purpose of reducing the phase gap, by measuring the actual phase gap and, based on the measurement result, amending design values before proceeding to mass production. However, there has been a problem that, in the actual evaporation, the actual optical path length varies from the design value depending on the aging and degradation of the evaporation equipment. As the wavelength of a laser beam to be used becomes shorter, the influence brought by the phase gap becomes larger. Therefore, the accuracy of laser beams having the wavelengths of 780 nm and 660 nm, which are used in known CDs, DVDs, etc., has been controlled as required by adjusting the evaporation equipment. However, the accuracy control of a laser beam having a blue laser in 405nm wavelenth, which is used for high density optical disks as two-types including a Blu-ray disc (BD) and High-Density DVD (HD DVD) using a violet semiconductor laser , has been difficult.

Fig. 7 is a table showing the degree of influence brought by the phase gap of numerical aperture controlling filters. As shown in Fig. 7, supposing that the degree of phase-gap influence brought by the wavelength of 780 nm, which is used for CDs, is defined as 1, the degree of phase-gap influence brought by the blue laser in a 405nm wavelength is multiplied up to 12.7 times. Therefore, disks employing the blue laser requires an accuracy of 1/12.7, compared to CDs.

SUMMARY

An advantage of the invention is to provide a numerical aperture controlling filter that has a smaller phase gap among optical thin films that is caused when the numerical aperture controlling filter is configured by depositing several types of optical thin films on a glass substrate.

In order to achieve the above advantage, a numerical aperture controlling filter and a method for manufacturing the numerical aperture controlling filter according to the invention employ the following.

According to a first aspect of the invention, a numerical aperture controlling filter includes: a first region that allows, when a laser beam having a different wavelength is incident on the numerical aperture controlling filter, the transmission of laser beams having all the wavelengths; and a second region that blocks the transmission of a laser beam having a predefined wavelength. In the above numerical aperture controlling filter, different materials are used for outermost layers of a first optical thin film that is formed in the first region and a second optical thin film that is formed in the second region. Further, the optical path length of either of the first optical thin film or the second optical thin film is adjusted by means of etching after depositing the first optical thin film and the second optical thin film.

In the numerical aperture controlling filter according to the first aspect of the invention, it is preferable that the wavelengths of the laser beams to be incident on the numerical aperture controlling filter are 780 nm, 660 nm, and 405 nm.

In the numerical aperture controlling filter according to the first aspect of the invention, it is preferable that the first optical thin film is a multilayer thin film that is configured by alternately evaporating a plurality of layers including Ta2O5/SiO2/Al2O3 as thin-film materials; and that the outermost layer of the first optical thin film is the deposition of A1203.

In the numerical aperture controlling filter according to the first aspect of the invention, it is preferable that the first optical thin film is a multilayer thin film that is configured by alternately evaporating a plurality of layers including Ta2O5/SiO2/MgF2 as thin-film materials; and that the outermost layer of the first optical thin film is the deposition of MgF2.

In the numerical aperture controlling filter according to the first aspect of the invention, it is preferable that the second optical thin film is a multilayer thin film that is configured by alternately evaporating a plurality of layers including Ta2O5/SiO2 as thin-film materials; and that the outermost layer of the second optical thin film is the deposition of Si02.

In the numerical aperture controlling filter according to the first aspect of the invention, it is preferable that the second optical thin film is a multilayer thin film that is configured by alternately evaporating a plurality of layers including TiO2/SiO2 as thin-film materials; and that the outermost layer of the second optical thin film is the deposition of SiO2.

According to a second aspect of the invention, a method for manufacturing a numerical aperture controlling filter having a first region and a second region includes: applying, in order to evaporate a first optical thin film in the first region, a photoresist all over a glass substrate and patterning the photoresist so as to leave the photoresist only in the second region; depositing a multilayer film by performing a first evaporation using a predefined thin-film material; completing the formation of the first optical thin film in the first region by removing the thin-film material, which is evaporated on the photoresist, together with the photoresist; applying, in order to evaporate a second optical thin film in the second region, a photoresist all over the glass substrate, on which the first optical thin film is deposited, and patterning the photoresist so as to leave the photoresist only in the first region; depositing a multilayer film by performing a second evaporation using a predefined thin-film material; completing the formation of the second optical thin film in the second region by removing the thin-film material, which is evaporated on the photoresist, together with the photoresist; and adjusting an optical path length of either of the first optical thin film or the second optical thin film by etching either of the first optical thin film or the second optical thin film. In the above method, the first region allows, when a laser beam having a different wavelength are incident on the numerical aperture controlling filter, the transmission of laser beams having all wavelengths; and the second region blocks the transmission of a laser beam having a predefined wavelength.

In the first and second aspects of the invention, since the phase gap is reduced by scraping one of the optical thin films by means of etching performed in the post-process of the manufacturing of a numerical aperture controlling filter, higher accuracy in the evaporation process can be achieved. Therefore, the optical properties of numerical aperture controlling filters are improved and the control of the blue laser in a 405nm wavelength becomes possible. Besides, the yield ratio in a production of numerical aperture controlling filters is also improved, which lowers the cost of numerical aperture controlling filters and provides a great advantage in using numerical aperture controlling filters.

BRIEF DESCRIPTION OF THE DRAWINGS

The invention will be described with reference to the accompanying drawings, wherein like numbers reference like elements.

Figs. 1A and 1B are configuration diagrams showing an embodiment of a numerical aperture controlling filter according to the first aspect of the invention.

Figs. 2A and 2B show the optical properties in a region B when the thickness of an outermost layer 15 of a second optical thin film 13 is varied in the numerical aperture controlling filter according to the first aspect of the invention.

Fig. 3 is a diagram showing the manufacturing steps of the numerical aperture controlling filter according to the second aspect of the invention.

Figs. 4A and 4B are diagrams showing an example use of a known numerical aperture controlling filter.

Fig. 5 is a diagram showing the manufacturing steps of the known numerical aperture controlling filter.

Fig. 6 is a diagram showing a phase gap in the known numerical aperture controlling filter.

Fig. 7 is a table showing the degree of influence brought by the phase gap of numerical aperture controlling filters.

DESCRIPTION OF EXEMPLARY EMBODIMENTS

An embodiment of the invention will now be described in detail with reference to the accompanying drawings.

In ,the embodiment of the invention, in order to reduce the phase gap between two optical thin films, a step for scraping one of the two optical thin films by means of etching has been added to the post-process of a method for manufacturing a numerical aperture controlling filter. In the above step, different materials are used for depositing each outermost layer of a first optical thin film and a second optical thin film. The thin-film material of one optical thin film in a region that does not require etching is harder and has a higher chemical resistance than the thin-film material of the other optical thin film in another region that is to be scraped by etching. Thus, only the optical thin film in one of the regions is scraped off in the etching process.

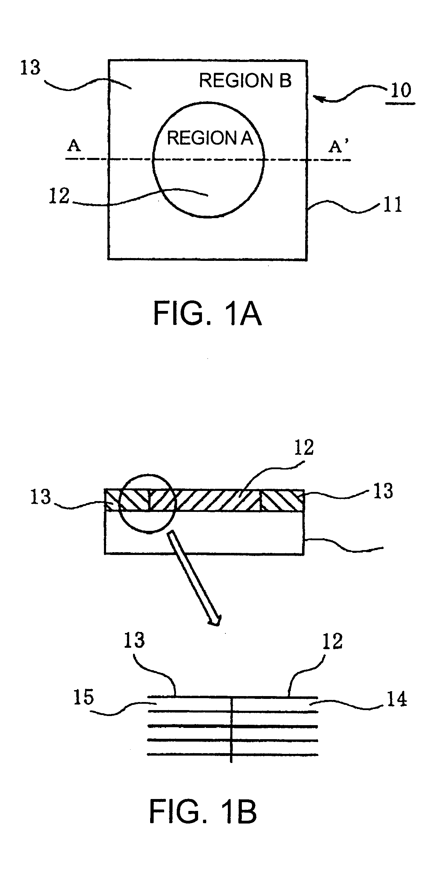

Figs. 1A and 1B are configuration diagrams showing an embodiment of a numerical aperture controlling filter according to the first aspect of the invention. Fig. 1A shows the incidence plane of a numerical aperture controlling filter 10. Fig. 1B shows the cross section taken along the line A-A' of the numerical aperture controlling filter 10. In the embodiment, a first optical thin film 12 is deposited in a region A (a first region) on a glass substrate 11, and a second optical thin film 13 is deposited in a region B (a second region) on the glass substrate 11. The first optical thin film 12 and the second optical thin film 13 have individual thin-film configuration using different materials. The first optical thin film 12 deposited on the region A allows the transmission of laser beams having the wavelengths of 780 nm, 660 nm, and 405 nm at a transmittance of 95% or higher. The second optical thin film 13 deposited on the region B allows the transmission of laser beams having the wavelengths of 660 nm and 405 nm at a transmittance of 95% or higher and controls the transmittance of a laser beam having the wavelength of 780 nm to be 4% or lower.

The first optical thin film 12 is a multilayer thin film that is configured by alternately evaporating a plurality of layers including $Ta_2O_5/SiO_2/Al_2O_3$ as thin-film materials or a multilayer thin film that is configured by alternately evaporating a plurality of layers including $Ta_2O_5/SiO_2/MgF_2$. In either case, $Al_2O_3$ or $MgF_2$, which is hard and has a high chemical resistance, needs to be deposited as an outermost layer 14 of the first optical thin film 12. On the other hand, the second optical thin film 13 is a multilayer thin film that is configured by alternately evaporating a plurality of layers including $Ta_2O_5/SiO_2$ as thin-film materials or a multilayer thin film that is configured by alternately evaporating a plurality of layers including $TiO_2/SiO_2$. In either case, $SiO_2$, which is easy to etch compared to hard and highly chemical-resistant $Al_2O_3$ or $MgF_2$ used as the thin-film material of the outermost layer 14 of the first optical thin film 12, needs to be deposited as an outermost layer 15 of the second optical thin film 13.

In addition, the embodiment describes the case where: the first optical thin film 12 is a multilayer thin film configured by alternately evaporating a plurality of layers including Ta2O5/SiO2/Al2O3 as thin-film materials or a multilayer thin film configured by alternately evaporating a plurality of layers including Ta2O5/SiO2/MgF2; and the second optical thin film 13 is a multilayer thin film configured by alternately evaporating a plurality of layers including Ta2O5/SiO2 as thin-film materials or a multilayer thin film configured by alternately evaporating a plurality of layers including TiO2/SiO2. However, the following optical thin-film configuration can also be allowed: the first optical thin film 12 is a multilayer thin film configured by alternately evaporating a plurality of layers including Ta2O5/SiO2 or a multilayer thin film configured by alternately evaporating a plurality of layers including TiO2/SiO2; and the second optical thin film 13 is a multilayer thin film configured by alternately evaporating a plurality of layers including Ta2O5/SiO2/Al2O3 or a multilayer thin film configured by alternately evaporating a plurality of layers including Ta2O5/SiO2/MgF2.

Further, in the embodiment, etching is performed after depositing the first optical thin film 12 and the second optical thin film 13, so as to eliminate the phase gap. In the embodiment shown in Figs. 1A and 1B, the second optical thin film 13 is etched, with the first optical thin film 12 left unetched. Since the thin film of the outermost layer 14 in the first optical thin film 12 is harder and has a higher chemical resistance than the thin film of the outermost layer 15 in the second optical thin film 13, as described above, the etching of the second optical thin film 13 to obtain a desired film thickness does not affect the first optical thin film 12.

Next, the influence on the optical properties of the second optical thin film 13 that is brought by the etching of the second optical thin film 13 will be described.

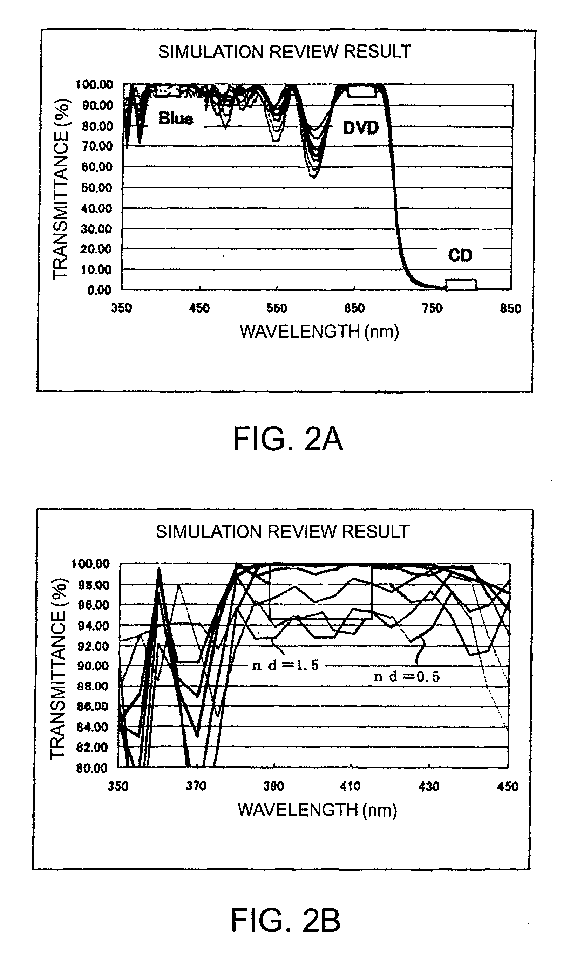

Figs. 2A and 2B show the optical properties in a region B, on which the second optical thin film 13 is deposited, when the thickness of an outermost layer 15 of the second optical thin film 13 is varied in the numerical aperture controlling filter according to the first aspect of the invention. Fig. 2A shows the properties of incident laser beams that are set to wavelengths of 350 nm to 850 nm. Fig. 2B, which is an enlargement of Fig. 2A, shows the properties of incident laser beams that are set to wavelengths of 350 nm to 450 nm, for a close observation of the optical properties around the blue-laser wavelength of 405 nm. The optical properties shown in Figs. 2A and 2B are derived from a simulation, wherein the thickness of the outermost layer 15 in the second optical thin film 13 is varied as: $nd = 1.5, 1.3, 1.1, 1.0, 0.9, 0.7,$ and $0.5$. The required transmittance is: 95% or higher around 405 nm, which is the wavelength for high density optical disks as two-types including BD and HD DVD, and 660 nm, which is the wavelength of the light source used for DVDs; and 4% or lower around 780 nm, which is the wavelength of the light source used for CDs.

In Fig. 2B, the line graphs except the ones indicated as $nd = 1.5$ and $nd = 0.5$ indicate the values of $nd = 1.3$ to $0.7$. As evidenced in Fig. 2B, a transmittance of 95% or higher is secured around the wavelength of 405 nm in the graphs of $nd = 1.3$ to $nd = 0.7$. Therefore, taking the graph of $nd = 1.3$ as a reference, there is no significant influence on the optical properties in the region B even when the outermost layer 15 of the second optical thin film 13 is etched within the width of 0.6 (approximately 50 nm in optical-path-length equivalent).

Next, a method for manufacturing a numerical aperture controlling filter according to the second aspect of the invention will be described.

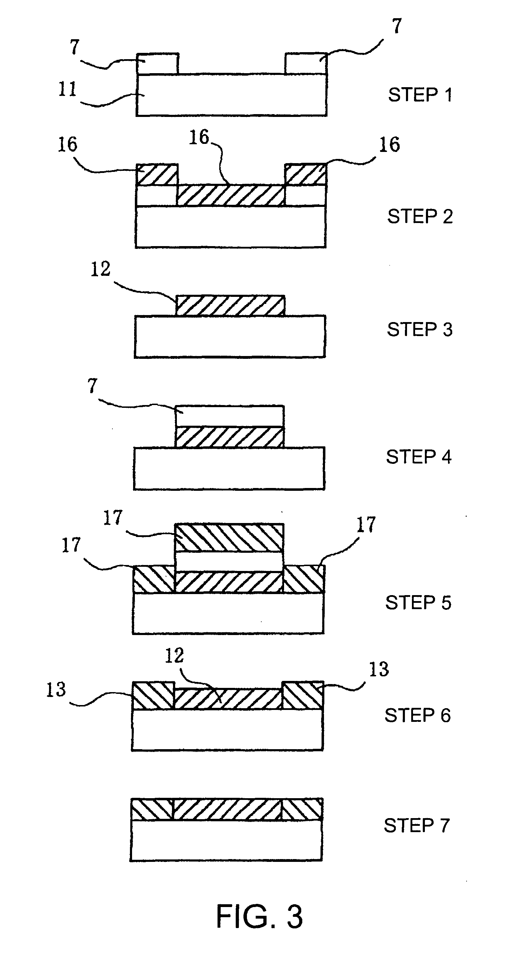

Fig. 3 is a diagram showing the manufacturing steps of the numerical aperture controlling filter according to the second aspect of the invention. First, in order to evaporate the first optical thin film 12 in the region A, the photoresist 7 is applied all over the glass substrate 11. Then, the photoresist 7 is patterned so as to leave the photoresist 7 only in the region B (a step 1). Then, after depositing a multilayer film by performing a first evaporation using a predefined thin-film material 16 (a step 2), the thin-film material 16, which is evaporated on the photoresist 7, is removed together with the photoresist 7 (a step 3). Thus, the formation of the first optical thin film 12 in the region A is completed.

Further, in order to evaporate the second optical thin film 13 in the region B, the photoresist 7 is applied all over the glass substrate 11. Then, the photoresist 7 is patterned so as to leave the photoresist 7 only in the region A (a step 4). Then, after depositing another multilayer film by performing a second evaporation using a predefined thin-film material 17 (a step 5), the thin-film material 17, which is evaporated on the photoresist 7, is removed together with the photoresist 7 (a step 6). Thus, the formation of the second optical thin film 13 in the region B is completed. Further, by etching the second optical thin film 13 within a predefined range so as to reduce the phase gap, the numerical aperture controlling filter is completed (a step 7).

In addition, the embodiment describes the case of depositing the first optical thin film 12 first and then the second optical thin film 13. However, the second optical thin film 13 can be deposited before depositing the first optical thin film 12.

**Claims**

1. A numerical aperture controlling filter, comprising:

   a first region that allows, when a laser beam having a different wavelength is incident on the numerical aperture controlling filter, transmission of laser beams having all the wavelengths; and a second region that blocks transmission of a laser beam having a predefined wavelength, wherein: different materials are used for outermost layers of a first optical thin film that is formed in the first region and a second optical thin film that is formed in the second region; and an optical path length of either of the first optical thin film or the second optical thin film is adjusted by means of etching after depositing the first optical thin film and the second optical thin film.

2. The numerical aperture controlling filter according to Claim 1, wherein the wavelengths of the laser beams to be incident on the numerical aperture controlling filter are 780 nm, 660 nm, and 405 nm.

3. The numerical aperture controlling filter according to Claim 1 or 2, wherein:

the first optical thin film is a multilayer thin film that is configured by alternately evaporating a plurality of layers including Ta2O5/SiO2/Al2O3 as thin-film materials; and an outermost layer of the first optical thin film is a deposition of Al2O3.

4. The numerical aperture controlling filter according to Claim 1 or 2, wherein:

the first optical thin film is a multilayer thin film that is configured by alternately evaporating a plurality of layers including Ta2O5/SiO2/MgF2 as thin-film materials; and an outermost layer of the first optical thin film is a deposition of MgF2.

5. The numerical aperture controlling filter according to anyone of Claims 1 to 4, wherein: the second optical thin film is a multilayer thin film that is configured by alternately evaporating a plurality of layers including Ta2O5/SiO2 as thin-film materials; and an outermost layer of the second optical thin film is a deposition of Si02.

6. The numerical aperture controlling filter according to any one of Claims 1 to 4, wherein: the second optical thin film is a multilayer thin film that is configured by alternately evaporating a plurality of layers including TiO2/SiO2 as thin-film materials; and an outermost layer of the second optical thin film is a deposition of Si02.

7. A method for manufacturing a numerical aperture controlling filter having a first region and a second region, comprising:

applying a photoresist all over a glass substrate in order to evaporate a first optical thin film in the first region, and patterning the photoresist so as to leave the photoresist only in the second region;
depositing a multilayer film by performing a first evaporation using a predefined thin-film material;
completing a formation of the first optical thin film in the first region by removing the thin-film material, which is evaporated on the photoresist, together with the photoresist;
applying, in order to evaporate a second optical thin film in the second region, a photoresist all over the glass substrate, on which the first optical thin film is deposited, and patterning the photoresist so as to leave the photoresist only in the first region;
depositing a multilayer film by performing a second evaporation using a predefined thin-film material;
completing a formation of the second optical thin film in the second region by removing the thin-film material, which is evaporated on the photoresist, together with the photoresist; and
adjusting an optical path length of either of the first optical thin film or the second optical thin film by etching either of the first optical thin film or the second optical thin film,
wherein: the first region allows, when a laser beam having a different wavelength is incident on the numerical aperture controlling filter, a transmission of laser beams having all wavelengths; and the second region blocks a transmission of a laser beam having a predefined wavelength.

13 ∿

REGION B

~10

A —·—·—·—·—·—·—·—·—·— A'

REGION A

12 ∿

11

## FIG. 1A

12

13 ∿

13

13

12

15 ∿

14

## FIG. 1B

FIG. 2A

FIG. 2B

7

7

11

STEP 1

16

16

16

STEP 2

12

STEP 3

7

STEP 4

17

17

17

STEP 5

12

13

13

STEP 6

STEP 7

FIG. 3

REGION B

REGION A

A ————————————— A'

**FIG. 4A**

$\lambda 1 + \lambda 2$

$\lambda 2$

$\lambda 1 + \lambda 2$

$\lambda 2$

FIRST RECORDING LAYER - - - - - - - - - - - - - - -

SECOND RECORDING LAYER - - - - - - - - - - - - - - -

**FIG. 4B**

7

7

4

STEP 1

8

8

8

STEP 2

5

STEP 3

7

STEP 4

9

9

9

STEP 5

5

6

6

STEP 6

FIG. 5

FIG. 6

| LIGHT SOURCE | CD | DVD | BLUE LASER |
|---|---|---|---|
| WAVELENGTH | 780nm | 660nm | 405nm |
| NUMERICAL APERTURE (LENSE) | 0.45 | 0.60 | 0.85 |
| DEGREE OF INFLUENCE BY PHASE-GAP | 1 | 3.16 | 12.7 |

FIG. 7